(19) **Europäisches Patentamt**

**European Patent Office**

**Office européen des brevets**

(11) **EP 1 559 741 A1**

(12) **EUROPEAN PATENT APPLICATION**

(43) Date of publication:
**03.08.2005 Bulletin 2005/31**

(51) Int Cl.$^7$: **C08J 5/18**, C08L 77/06,
B29C 61/06

(21) Application number: **05001738.3**

(22) Date of filing: **27.01.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **30.01.2004 JP 2004023507**

(71) Applicant: **Mitsubishi Engineering-Plastics
Corporation
Tokyo (JP)**

(72) Inventors:
 • **Ohyama, Hajime
 c/o Mitsubishi Eng.-Plastics Corp.
 Hiratsuka-shi Kanagawa-ken (JP)**

 • **Tsunoda, Morio
 c/o Mitsubishi Eng.-Plastics Corp.
 Hiratsuka-shi Kanagawa-ken (JP)**
 • **Nakao, Tetsuya
 c/o Mitsubishi Eng.-Plastics Corp.
 Hiratsuka-shi Kanagawa-ken (JP)**

(74) Representative: **HOFFMANN - EITLE
Patent- und Rechtsanwälte
Arabellastrasse 4
81925 München (DE)**

(54) **Aliphatic polyamide resin-based heat-shrinkable film**

(57)    The present invention relates to an aliphatic polyamide resin-based heat-shrinkable film comprising an aliphatic polyamide resin(s) and having a melting point of not lower than 150°C,

the amounts of the structural units of all the aliphatic polyamide resins constituting the film being: (A) 50 to 95 parts by weight of polyamide 6 unit, (B) 5 to 50 parts by weight of polyamide 69 unit, and (C) 0 to 20 parts by weight of polyamide 66 unit, based on the total of the amounts of the structural units being 100 parts by weight.

**Description**

BACKGROUND OF THE INVENTION

The present invention relates to an aliphatic polyamide resin-based heat-shrinkable film. More particularly, it relates to an aliphatic polyamide resin-based heat-shrinkable film which is particularly useful for shrink packaging of processed food products such as ham and sausage, machine and electronic parts, and miscellaneous goods for daily use.

Heat-shrinkable film is a prestretched film which is shrunk when dipped in hot water. This film, when shrunk, is attached tightly to the material contained therein to purge air in the inside of the film package, so that it is popularly used as a packaging film for preservation foods. A higher shrinkability of the film ensures a tighter attachment of the film to the contained material and a greater amount of air purged, so that a film with high shrinkability is desired. The film is also required to be heat resistant since some materials contained, such as livestock products, are subjected to a long-time hot water or steam treatment at a temperature of over $100°C$ for sterilization.

Polyamide films, which excel in gas barrier properties and heat resistance, are suited for use as a film for food preservation, and the films obtained by biaxially stretching polyamide 6 homopolymers or polyamide 6/66 copolymers have been known and used as this type of film. However, to this type of film, further improvement of shrinkability of the films has been requested, and studies have been pursued on the methods for improving shrinkability by using polyamide copolymers having xylenediamines or other aromatic compounds such as terephthalic acid and isophthalic acid as a copolymer component or by mixing polyamides having such aromatic compounds as one of the main components (See Japanese Patent Application Laid-Open (KOKAI) Nos. 51-84847, 62-41261, 62-131060, 63-268744, 2-107428 and 4-342735). However, any of the proposed films was subject to the problem of increased formation of pinholes and resultant deterioration of gas barrier performance because of high rigidity and poor flexibility.

SUMMARY OF THE INVENTION

The object of the present invention is to provide an aliphatic polyamide resin-based heat-shrinkable film which has flexibility and excels in shrinkability in hot water.

As a result of the present inventors' earnest study to attain the above object, it has been found that the above object can be attained by forming a film from an aliphatic polyamide resin(s) of which the specific amide resin component falls within a specific range of composition, and stretching and heat setting the film to obtain a film having a specific melting point.

The present invention has been attained on the basis of the above finding.

In an aspect of the present invention, there is provided an aliphatic polyamide resin-based heat-shrinkable film comprising an aliphatic polyamide resin(s) and having a melting point of not lower than $150°C$,

the amounts of the structural units of all the aliphatic polyamide resins constituting the film being: (A) 50 to 95 parts by weight of polyamide 6 unit, (B) 5 to 50 parts by weight of polyamide 69 unit, and (C) 0 to 20 parts by weight of polyamide 66 unit, based on the total of the amounts of the structural units being 100 parts by weight.

DETAILED DESCRIPTION OF THE INVENTION

The present invention will be explained in detail below.

Polyamide resins

The aliphatic polyamide resin-based heat-shrinkable film according to the present invention comprises at least one type of aliphatic polyamide resin and/or copolymer aliphatic polyamide resin. The aliphatic polyamide resin used in the present invention has as its essential components (A) a polyamide 6 unit (caprolactam unit) and (B) a polyamide 69 unit (hexamethylenediamine/azelaic acid dehydration condensate unit), and may have (C) a polyamide 66 unit (hexamethylenediamine/adipic acid dehydration condensate unit). The amounts of the said three structural units of all the aliphatic polyamide resins constituting the film are: (A) 50 to 95, preferably 55 to 80 parts by weight of polyamide 6 unit, (B) 5 to 50, preferably 8 to 30 parts by weight of polyamide 69 unit, and (C) 0 to 20, preferably 0 to 18 parts by weight of polyamide 66 unit, with the total of the amounts of the structural units being 100 parts by weight.

If the content of the polyamide 6 unit (A) exceeds the upper limit of the above-defined range, the produced film may lack flexibility and heat shrinkability, and if the unit (A) content is below the lower limit of the defined range, the film strength may be unsatisfactory. If the content of the polyamide 69 unit (B) exceeds the upper limit of the above-defined range, the film strength is low, and if the unit (B) content is below the upper limit of the defined range, the film may be unsatisfactory in heat shrinkability. Heat shrinkability of the film is improved by containing the polyamide 66 unit (C) within the above-defined amount range, but the film strength may lower if the unit (C) content exceeds the upper limit of the defined range.

The aliphatic polyamide resin used in the present invention may be a copolymer polyamide resin having in itself the said three structural units, or may be a mixture of several types of polyamide resins or copolymer polyamide resins having one or two of the said three structural units, but the latter is preferred in view of heat resistance. Thus, it is preferable to mix polyamide resins such as polyamide 6, polyamide 6/66 copolymer resin, polyamide 69, and polyamide 6/69 copolymer resin in a way to satisfy the above definition of content of the three structural units, and use such a mixture as the starting material for the heat-shrinkable film of the present invention. Mixing of the polyamide resins may be conducted at any stage before the film forming process. Also, no restrictions are imposed on the way of mixing; it is possible to use, for instance, a method in which the chips of the said starting polyamide resins are mixed and the mixture is melted and kneaded by an extruder to obtain the three-component chips, or a method in which the chips of the said starting polyamide resins are uniformly melted and mixed by an extruder used for forming the films.

The relative viscosity of the aliphatic polyamide such as polyamide 6, polyamide 6/66 copolymer resin, polyamide 69, and polyamide 6/69 copolymer is usually 2.0 to 6.0, preferably 2.5 to 5.0. The relative viscosity thereof is determined according to JIS K-6810 in 98% sulfuric acid at 25°C.

The aliphatic polyamide resin used in the present invention may contain, in addition to the specified three components, other polyamide resin constituents such as decane lactam, lauryl lactam and the salts of hexamethylenediamine and sebacic acid or dodecanoic diacid within limits not prejudicial to the object of the present invention. Examples of the polyamide resins to be mixed are polyamide 6/10 copolymer resin, polyamide 6/12 copolymer resin, polyamide 10, polyamide 12, polyamide 610, and polyamide 612. Mixing of such polyamide resins is useful for preventing the film from the decline of strength due to water absorption of the film.

In the heat-shrinkable film of the present invention, in order to improve gas barrier properties of the film, an aromatic compound-containing polyamide resin may be blended within limits not injurious to the effect of the present invention. Examples of such aromatic compound-containing polyamide resins are polyamide MXD6 and the polyamide resins containing polyamide resin constituents such as aliphatic diamines and terephthalic acid and/or isophthalic acid (or salts thereof), for example polyamide 6I/6T copolymer resin, polyamide 6T and polyamide 6I. Such an aromatic compound-containing polyamide resin is contained in an amount of preferably not more than 20% by weight, more preferably not more than 15% by weight, based on the overall weight of the aliphatic polyamide resin.

It is also possible to contain a resin (or resins) other than polyamide resins within limits not impairing the effect of the present invention. Exemplary of the resins other than polyamide resins usable in the present invention are polyolefin resins, polybutyrene terephthalate resins, polyethylene terephthalate resins, polycarbonate resins, polyphenylene ether resins, and ABS resins. Such other resin is contained in an amount of preferably not more than 20% by weight, more preferably not more than 10% by weight, based on the overall weight of the aliphatic polyamide resin.

Aliphatic polyamide resin-based heat-shrinkable film

The film is formed according to a known method such as blown or water cooled with circulated die process or T-die cast process in which the starting polyamide resin (or a mixture of polyamide resins) is plasticized by an extruder at a molding temperature not lower than the melting point of the polyamide resin and extruded into a film from the die, and the extruded film is cooled rapidly at a temperature usually not higher than 80°C to obtain a non-stretched film. The non-stretched film is then stretched in a mono- or multi-axial directions at a temperature in the range of 60 to 120°C by a known method such as tentering or tubular film forming method. The stretch ratio is usually not less than 2.0 times, preferably not less than 2.5 times, and the film is preferably stretched biaxially. Biaxial stretching may be either successive or simultaneous, but the simultaneous stretching is preferred for providing a high shrinkage percentage.

The stretched film is heat set at usually 60 to 150°C, preferably 90 to 120°C, for usually 5 to 180 seconds, preferably 10 to 90 seconds, and then cooled rapidly to a temperature of not higher than 60°C to obtain a heat-shrinkable film.

The film obtained by subjecting a polyamide resin(s) to the film-forming, stretching and heat setting operations as described above is required to have a melting point, as measured by DSC analysis, of not lower than 150°C. If the melting point of the film as measured by DSC is lower than 150°C, there may take place fusion of the film when it is put into hot water for shrinking, which poses a serious problem in practical application.

The thus obtained heat-shrinkable film of the present invention is shrunk at a very high shrinkage percentage when put into hot water of not lower than 60°C after packed with a substance such as processed foodstuff. The shrinkage percentage of the heat-shrinkable film of the present invention when treated in hot water of 80°C is usually not lower than 32%, preferably not lower than 34 % in average of the longitudinal and transverse shrinkage percentages.

In forming the aliphatic polyamide resin-based heat-shrinkable film according to the present invention, it is possible to incorporate known additives within limits not affecting the effect of the present invention. Such additives include, for instance, lubricants such as stearic acid, calcium stearate, magnesium stearate, ethylene-bis-stearamide and stearic monoglyceride, inorganic fine particles such as particles of silica, talc, kaolin and zeolite, antistatic agents such as sodium alkylbenzenesulfonate, antioxidants such as hindered phenolic antioxidants, and various types of colorants.

The shrinkable film of the present invention, if required, may have laminated on at least one side thereof other type of resin such as polyolefin resins (polyethylene, polypropylene, ethylene-vinyl acetate copolymer, etc.), partially saponified version of ethylene-vinyl acetate copolymer, polyester resins, etc., to afford heat sealability to the film. For forming such a multi-layered film, there can be used a known method, for example, a specified polyamide resin-made heat-shrinkable film is formed first and then a film of other resin is laminated thereon, or a specified polyamide resin and other resin are coextruded from a die and then co-stretched.

The aliphatic polyamide resin-based heat-shrinkable film according to the present invention has high flexibility and shrinkability in hot water and also excels in gas barrier properties and chemical resistance, so that the film of the present invention can be applied to a wide variety of uses, such as shrinkable packaging film for processed meat products such as ham and sausage, machine and electronic parts, and miscellaneous goods for daily use.

EXAMPLES

The present invention will be explained in further detail with reference to the examples thereof, but it should be understood that the present invention is not limited to these examples but can be embodied in other forms as well without departing from the scope of the invention. The materials used in the following Examples and Comparative Examples are as described below.

1. Polyamide 6/66 copolymer resin:

A mixture comprising 8 parts by weight of caprolactam and 2 parts by weight of a salt of hexamethylenediamine and .adipic acid was supplied to a 200-litre autoclave and heated to 270°C under an internal pressure of 1.3 MPa. Then, with the internal temperature maintained at 245°C, pressure was reduced gradually to 0.05 MPa with stirring, and when the stirring power reached the specified value, the reaction under reduced pressure was stopped. After stopping of the reaction under reduced pressure, nitrogen was introduced to restore the normal pressure, and the reaction mixture was drawn into a strand and pelletized. After removing the unreacted materials by extraction with boiled water, the residual product was dried to obtain a polyamide 6/66 copolymer resin. The ratio of polyamide 6 unit/ polyamide 66 unit in this copolymer resin was 80/20 in percent (%) by weight. Relative viscosity: 4.5.

2. Polyamide 6/69 copolymer resin:

A mixture comprising 5 parts by weight of caprolactam and 5 parts by weight of a salt of hexamethylenediamine and azelaic acid was supplied to a 200-litre autoclave and heated to 270°C under an internal pressure of 1.3 MPa. Then, with the internal temperature maintained at 245°C, pressure was reduced gradually to 0.05 MPa with stirring, and when the stirring power reached the specified value, the reaction under reduced pressure was stopped. After stopping of the reaction under reduced pressure, nitrogen was introduced to restore the normal pressure, and the reaction mixture was drawn to a strand and pelletized. After removing the unreacted materials by extraction with boiled water, the residual product was dried to obtain a polyamide 6/69 copolymer resin. The ratio polyamide 6 unit/polyamide 69 unit in this copolymer resin was 50/50 in percent (%) by weight. Relative viscosity: 2.9.

3. Polyamide 6 resin:

NOVAMID 1030 produced by Mitsubishi Engineering-Plastics Corporation was used. Relative viscosity: 4.5.

4. Polyamide 6/12 copolymer resin:

Grillamide CR8 (ratio of polyamide 6 unit/polyamide 12 unit in this copolymer resin = 80/20 in percent by weight) produced by EMS Co., Ltd. was used. Relative viscosity: 1.8 (determined in 0.5% by weight of m-cresol solution at 20°C).

5. Polyamide 6I/6T copolymer resin:

NOVAMID X21 (an aromatic compound-containing polyamide resin with the aromatic compound content of 50 mol%) produced by Mitsubishi Engineering-Plastics Corporation was used.

The evaluation methods of the films produced in the Examples and Comparative Examples are as described below.

1. Melting point:

Using the evaluation samples of the films in which stretching and heat setting had done, the temperature of the peak melting point was measured by DSC according to JIS K7121.

2. Modulus of elasticity:

Using the evaluation samples of the films in stretching and heat setting had done, the complex elastic modulus at a measuring frequency of 110 Hz and normal temperature (23°C) was measured by RHEOVIBRON DDV-11-ER mfd. by Orientec Co., Ltd.

3. Shrinkage percentage:

The films which had gone through simultaneous biaxial stretching and heat setting were cut into 100 mm$^2$ test pieces, and these test pieces were subjected to 24-hour conditioning at a humidity of 65% and then immersed in 80°C hot water for one minute. The lengths in both longitudinal and transverse directions of each test piece after hot water immersion were measured, and the shrinkage percentages in each direction were calculated by the following equation.

Shrinkage percentage (%) =

(length (before immersion) - length (after immersion)) X

100 / length (before immersion)

The average of the obtained values in both directions was expressed as shrinkage percentage.

Examples 1 to 6 and Comparative Examples 1 to 5

Each mixture of polyamide resins blended in the ratios shown in Table 1 was extruded from the T-die of an extruder at a barrel temperature of 250°C and a die temperature of 245 °C, and the extrudate was cooled rapidly by the 50°C casting rolls to obtain a non-stretched film with a thickness of 135 μm. This non-stretched film was biaxially stretched 3 times in both machine and transverse directions simultaneously by tentering at 65°C and then subjected to 60-second heat setting at 120°C to obtain a 15 μm thick film as an evaluation sample. Evaluation results are shown in Table 1.

Table 1

| | Example | | | |
|---|---|---|---|---|
| | 1 | 2 | 3 | 4 |
| Mixing ratio of polyamide resins[1] (Resins/ Composition) | | | | |
| 6/66 (80/20) | 80 | 50 | 20 | - |
| 6/69 (50/50) | 20 | 50 | 80 | 50 |
| 6 | - | - | - | 50 |
| 6/12 (80/20) | - | - | - | - |
| 6I/6T | - | - | - | - |
| Ratio of components[2] (Resins/ Composition) | | | | |
| (A)/6 | 74 | 65 | 56 | 75 |
| (B)/69 | 10 | 25 | 40 | 25 |
| (C)/66 | 16 | 10 | 4 | 0 |
| Melting point (°C) | 192 | 190 | 188 | 218 |
| Modulus of elasticity (MPa) | 2500 | 2300 | 1700 | 2600 |
| Shrinkage percentage (%) | 35 | 36 | 40 | 35 |

Table 1 (Continued)

| | Example | | Comp. Example | |
|---|---|---|---|---|
| | 5 | 6 | 1 | 2 |
| Mixing ratio of polyamide resins[1] (Resins/ Composition) | | | | |
| 6/66 (80/20) | 70 | 70 | 100 | - |
| 6/69 (50/50) | 20 | 20 | - | 100 |
| 6 | - | - | - | - |
| 6/12 (80/20) | - | 10 | - | - |
| 6I/6T | 10 | - | - | - |
| Ratio of components[2] (Resins/ Composition) | | | | |
| (A)/6 | 73.3 | 75.5 | 80 | 50 |
| (B)/69 | 11.1 | 10.2 | 0 | 50 |
| (C)/66 | 15.6 | 14.3 | 20 | 0 |
| Melting point (°C) | 191 | 190 | 194 | 134 |
| Modulus of elasticity (MPa) | 2800 | 2300 | 2700 | 800 |
| Shrinkage percentage (%) | 36 | 35 | 30 | Fused |

Table 1 (Continued)

| | Comp. Example | | |
|---|---|---|---|
| | 3 | 4 | 5 |
| Mixing ratio of polyamide resins[1] (Resins/ Composition) | | | |
| 6/66 (80/20) | - | - | 80 |
| 6/69 (50/50) | - | - | - |
| 6 | 100 | - | - |
| 6/12 (80/20) | - | 100 | - |
| 6I/6T | - | - | 20 |
| Ratio of components[2] (Resins/ Composition) | | | |
| (A)/6 | 100 | 100 | 80 |
| (B)/69 | 0 | 0 | 0 |
| (C)/66 | 0 | 0 | 20 |
| Melting point (°C) | 224 | 188 | 188 |
| Modulus of elasticity (MPa) | 4300 | 2150 | 3800 |
| Shrinkage percentage (%) | 20 | 30 | 35 |

Notes:

1) 6/66 denotes polyamide 6/66 copolymer resin, 6/69 denotes polyamide 6/69 copolymer resin, 6 denotes polyamide 6 resin, 6/12 denotes polyamide 6/12 copolymer resin, and 6I/6T denotes polyamide 6I/6T copolymer resin.

The figures in the horizontal column of ``Composition'' show the compositional ratios of the respective copolymer resins on weight basis.

2) The figures in the column of ``Ratio of components'' in the table show the parts by weight of the respective components: (A) caprolactam (6), (B) salt of hexamethylenediamine and azelaic acid (69) and (C) salt of hexamethylenediamine and adipic acid (66), to 100 parts by weight of (A), (B) and (C) combined.

From the above, it is clearly understood that the heat-shrinkable film comprising the aliphatic polyamide resins according to the present invention is low in modulus of elasticity, high in flexibility and also excellent in shrinkability in hot water.

## Claims

1. An aliphatic polyamide resin-based heat-shrinkable film comprising an aliphatic polyamide resin(s) and having a melting point of not lower than 150°C,
   the amounts of the structural units of all the aliphatic polyamide resins constituting the film being: (A) 50 to 95 parts by weight of polyamide 6 unit, (B) 5 to 50 parts by weight of polyamide 69 unit, and (C) 0 to 20 parts by weight of polyamide 66 unit, based on the total of the amounts of the structural units being 100 parts by weight.

2. The aliphatic polyamide resin-based heat-shrinkable film according to claim 1, wherein the shrinkage percentage of the film when treated in 80°C hot water is not less than 32% in average of the longitudinal and transverse shrinkage percentages.

3. The aliphatic polyamide resin-based heat-shrinkable film according to claim 1 or 2, wherein the polyamide resin is a mixture of polyamide 6/66 copolymer resin and polyamide 6/69 copolymer resin.

4. The aliphatic polyamide resin-based heat-shrinkable film according to claim 1 or 2, wherein the polyamide resin is a mixture of polyamide 6 resin and polyamide 6/69 copolymer resin.

**European Patent Office**

## EUROPEAN SEARCH REPORT

Application Number

EP 05 00 1738

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 685 510 A (UNITIKA LTD) 6 December 1995 (1995-12-06) * example 4; tables 2,3 * ----- | 1-4 | C08J5/18 C08L77/06 B29C61/06 |
| X | US 5 928 738 A (AUF DER HEIDE ET AL) 27 July 1999 (1999-07-27) * example 4; table * ----- | 1-4 | |
| A | US 5 346 936 A (BUEHLER ET AL) 13 September 1994 (1994-09-13) * column 7, line 7 - line 9 * ----- | 1-4 | |
| A | WO 99/46333 A (ALLIEDSIGNAL INC) 16 September 1999 (1999-09-16) * figure 3 * ----- | 1-4 | |
| A | EP 0 573 306 A (W.R. GRACE & CO.-CONN; CRYOVAC, INC) 8 December 1993 (1993-12-08) * page 4, line 14 - line 16; claims 1,6 * ----- | 1-4 | TECHNICAL FIELDS SEARCHED (Int.Cl.7) C08J C08L B29C |

The present search report has been drawn up for all claims

| Place of search | Date of completion of the search | Examiner |
|---|---|---|
| Munich | 6 May 2005 | Attalla, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 559 741 A1**

**ANNEX TO THE EUROPEAN SEARCH REPORT
ON EUROPEAN PATENT APPLICATION NO.**   EP 05 00 1738

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2005

| Patent document cited in search report | | Publication date | Patent family member(s) | | Publication date |
|---|---|---|---|---|---|
| EP 0685510 | A | 06-12-1995 | JP | 8047972 A | 20-02-1996 |
| | | | DE | 69501288 D1 | 05-02-1998 |
| | | | DE | 69501288 T2 | 14-05-1998 |
| | | | EP | 0685510 A1 | 06-12-1995 |
| | | | US | 5612105 A | 18-03-1997 |
| US 5928738 | A | 27-07-1999 | DE | 19625094 A1 | 02-01-1998 |
| | | | AT | 246452 T | 15-08-2003 |
| | | | DE | 59710529 D1 | 11-09-2003 |
| | | | EP | 0815732 A2 | 07-01-1998 |
| | | | JP | 10094360 A | 14-04-1998 |
| US 5346936 | A | 13-09-1994 | DE | 4119915 A1 | 24-12-1992 |
| | | | AU | 643144 B2 | 04-11-1993 |
| | | | AU | 1825492 A | 21-01-1993 |
| | | | CA | 2071174 A1 | 18-12-1992 |
| | | | DE | 59209479 D1 | 08-10-1998 |
| | | | EP | 0519367 A1 | 23-12-1992 |
| | | | JP | 2548488 B2 | 30-10-1996 |
| | | | JP | 5239265 A | 17-09-1993 |
| WO 9946333 | A | 16-09-1999 | US | 6040392 A | 21-03-2000 |
| | | | AU | 2981299 A | 27-09-1999 |
| | | | CA | 2323365 A1 | 16-09-1999 |
| | | | DE | 69900757 D1 | 28-02-2002 |
| | | | DE | 69900757 T2 | 14-08-2002 |
| | | | EP | 1084192 A1 | 21-03-2001 |
| | | | JP | 2002506108 T | 26-02-2002 |
| | | | WO | 9946333 A1 | 16-09-1999 |
| EP 0573306 | A | 08-12-1993 | AT | 195402 T | 15-09-2000 |
| | | | AT | 267698 T | 15-06-2004 |
| | | | AU | 3992793 A | 09-12-1993 |
| | | | CA | 2097669 A1 | 06-12-1993 |
| | | | DE | 69329217 D1 | 21-09-2000 |
| | | | DE | 69333539 D1 | 01-07-2004 |
| | | | DK | 573306 T3 | 09-10-2000 |
| | | | EP | 0573306 A2 | 08-12-1993 |
| | | | EP | 0980752 A2 | 23-02-2000 |
| | | | ES | 2150435 T3 | 01-12-2000 |
| | | | ES | 2221291 T3 | 16-12-2004 |
| | | | JP | 6065501 A | 08-03-1994 |
| | | | MX | 9303359 A1 | 31-01-1994 |
| | | | NZ | 247739 A | 27-02-1996 |
| | | | US | 2004071903 A1 | 15-04-2004 |
| | | | US | 2001036555 A1 | 01-11-2001 |

For more details about this annex : see Official Journal of the European Patent Office, No. 12/82

10

**ANNEX TO THE EUROPEAN SEARCH REPORT
ON EUROPEAN PATENT APPLICATION NO.**

EP 05 00 1738

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2005

| Patent document cited in search report | | Publication date | Patent family member(s) | | Publication date |
|---|---|---|---|---|---|
| EP 0573306 | A | | US 6203750 | B1 | 20-03-2001 |
| | | | ZA 9303880 | A | 27-12-1993 |

For more details about this annex : see Official Journal of the European Patent Office, No. 12/82